# EUROPÄISCHE PATENTSCHRIFT

(11) **EP 2 673 529 B1**
(45) Veröffentlichungstag und Bekanntmachung des Hinweises auf die Patenterteilung: **20.07.2016**
(21) Anmeldenummer: 12701502.2
(22) Anmeldetag: 25.01.2012
(51) Int. Cl.: F16F 9/084, B60G 15/12

(54) **LUFTFEDERBEIN FÜR EIN FAHRZEUG**
AIR SPRING STRUT FOR A VEHICLE
JAMBE DE SUSPENSION PNEUMATIQUE POUR UN VÉHICULE

(30) Priorität: 08.02.2011 DE 102011003776; 21.09.2011 DE 102011083129; 23.11.2011 DE 102011086909
(43) Veröffentlichungstag der Anmeldung: 18.12.2013
(73) Patentinhaber: Continental Teves AG & Co. oHG, 60488 Frankfurt (DE)
(72) Erfinder: EIKE, Thomas, 30159 Hannover (DE); GLEU, Jens Uwe, 30855 Langenhagen (DE); WASCHK, Reiner, 30455 Hannover (DE); TETZLAFF, Ingo, 30890 Barsinghausen (DE)
(74) Vertreter: Höer, Daniela
(86) Internationale Anmeldenummer: PCT/EP2012/051106
(87) Internationale Veröffentlichungsnummer: WO 2012/107285

(56) Entgegenhaltungen:
- EP-A1- 0 204 913
- EP-A1- 1 614 928
- EP-A1- 2 253 491
- DE-C1- 19 508 980
- US-A- 4 662 615

## Beschreibung

Aus dem Stand der Technik sind Luftfederungen für Fahrzeuge bekannt. Beispielsweise offenbart die DE 195 08 980 C1 ein Luftfederbein mit einem vorzugsweise als Stoßdämpfer ausgebildeten Teleskoporgan und einer damit kombinierten volumenveränderlicheh Luftkammer, welche ein mit dem Zylinder des Teleskoporgans taumelbeweglich verbundenes Gehäuseteil sowie ein relativ zu dem Kolben bzw. der Kolbenstange des Teleskoporgan taumelbewegliches weiteres Gehäuseteil und ein zwischen diesen Gehäuseteilen angeordneten Balg aufweist.

In der DE 199 08 607 A1 wird für ein Luftfederbein mit Luftfederbalg eine radiale Abstützung des als Innenführung für den Luftfederbalg dienenden Luftfederkolbens gegenüber einer zentralen Abstützung vorgeschlagen, die eine wechselseitige Berührung der Balgwände bei seitlicher Auslenkung des Luftfederbeines ausschließt.

In der EP 22 53 491 A1 ist ein Abrollkolben eines Luftfederbeines über einen Lagerrollbalg mit einem Dämpferrohr verbunden, wobei der Lagerrollbalg mit dem Arbeitsraum der Luftfeder in Verbindung steht. Der Lagerrollbalg ist spiegelbildlich zum Luftfederrollbalg und mit zum Luftfederrollbalg entgegengesetzter Tragwirkung ausgebildet. Die Abrollbewegung des Lagerrollbalges ist der Abrollbewegung des Luftfederrollbalges kinematisch entgegengesetzt.

Der Lagerrollbalg ist zwischen dem Außenschenkel eines Tragringes und dem Ende des Abrollkolbens befestigt. Bei Relativbewegungen zwischen Abrollkolben und Dämpferrohr eine radiale Zentrierung des Abrollkolbens am Dämpferrohr 7 erfolgt. Der untere Teil des Abrollkolbens ist mit einem zusätzlichen Elastomerlager aus relativ weichem Elastomer, das zur axialen Fixierung zwischen Abrollkolben und Dämpferrohr vorgesehen.

Die EP 16 14 928 A1 offenbart eine relevante Luftfeder, wobei die in axialer Richtung wirkenden Drückkräfte durch einem Federlagerring weitgehend ausgeglichen sind.

Demgegenüber liegt der Erfindung die Aufgabe zugrunde, ein verbessertes Luftfederbein und ein verbessertes System aus einem Luftfederbein und einem Fahrzeug zu schaffen.

Diese Aufgaben werden mit den unabhängigen Patentansprüchen gelöst. Ausführungsformen der Erfindung sind in den abhängigen Patentansprüchen angegeben.

Die Erfindung betrifft ein Luftfederbein für ein Fahrzeug mit einem Luftfederbalg, einer Arbeitskammer, einem Dämpferzylinder, einem Dämpfungskolben und einem elastisch verformbaren Lagerkörper. Der Dämpfungskolben ist dabei innerhalb des Dämpferzylinders bewegbar angeordnet. Der Luftfederbalg ist eine luftdichte äußere Begrenzung der Arbeitskammer. Auch der Lagerkörper ist eine luftdichte äußere Begrenzung der Arbeitskammer. Der Lagerkörper ist zwischen dem Dämpferzylinder und einer Außenwandung der Arbeitskammer angeordnet. Vorzugsweise verläuft der Lagerkörper zum Teil parallel zum Dämpfungskolben und dem Dämpferzylinder. Ein Teilbereich der Arbeitskammer erstreckt sich zwischen einem Kragen der Außenwandung der Arbeitskammer und dem Lagerkörpter. In der Arbeitskammer herrscht ein Arbeitskammerluftdruck, sodass durch den Teilbereich der Arbeitskammer unterhalb des Lagerkörpers der Arbeitskammerluftdruck von unten auf den Lagerkörper wirkt. Als unten wird im Sinne der Erfindung die Richtung verstanden, die beim üblichen Einbau eines Luftfederbeins in ein Fahrzeug in Richtung des Rades zeigt.

Dadurch, dass von unten der Arbeitskammerluftdruck auf den Lagerkörper wirkt, wird der Lagerkörper entlastet. Es wird somit eine deutliche Komfortsteigerung ermöglicht. Da im Ruhezustand weniger Last auf dem Lagerkörper liegt, kann der Lagerkörper besonders weich federnd ausgestaltet werden.

Falls durch eine Federbewegung des Federbeins der Teilbereich der Arbeitskammer zwischen dem Lagerkörper und dem Kragen der Außenwandung soweit verkleinert wird, dass zumindest ein Teil des Lagerkörpers sich an dem Kragen der Außenwandung abstützt, erfolgt eine Federung der Bewegung durch den Lagerkörper.

Im Betrieb wird der Lagerkörper auf Schub belastet. Mit anderen Worten handelt es sich also um ein Schublager. Der Lagerkörper dient dazu, kleine Bewegungen des Dämpfungskolbens relativ zum Dämpferzylinder und umgekehrt abzufedern. Solch kleine Bewegungen können nicht durch den Luftfederbalg abgefedert werden, da dieser bei einer Federung auf einer Außenseite eines Abrollkolbens des Federbeins abrollt und hierfür ein geringer Widerstand überwunden werden muss. Dadurch, dass der Lagerkörper eine luftdichte äußere Begrenzung der Arbeitskammer darstellt, umfasst der Teilbereich der Arbeitskammer zwischen dem Kragen der Außenwandung und dem Lagerkörper Luft mit dem gleichen Luftdruck wie in dem Luftfederbalg. Diese Tatsache ermöglicht es, dass der Lagerkörper weichfedernd ausgestaltet werden kann. Der Lagerkörper muss nicht als tragendes Element für das Gewicht des Fahrzeugs dienen. Hierdurch lässt sich der Lagerkörper besonders weichfedernd ausgestalten, was eine Abfederung besonders kleinerer Amplituden ermöglicht. Die Abfederung besonders kleiner Amplituden ist besonders vorteilhaft, um das Fahrzeug akustisch von der Achse oder dem Rad zu entkoppeln, das durch das Federbein gefedert wird. Größere Bewegungen des Dämpfungskolbens relativ zum Dämpferzylinder oder umgekehrt werden durch den Luftfederbalg abgefedert.

Nach Ausführungsformen der Erfindung besteht der Lagerkörper aus einem Elastomer. Dies ist besonders vorteilhaft, da ein Elastomer als Dichtmittel für die Arbeitskammer verwendet werden kann und gleichzeitig eine Elastizität aufweist, die zur Federung besonders vorteilhaft genutzt werden kann.

Gemäß der Erfindung weist der Lagerkörper zumindest eine hervorstehende Nase auf. Die Nase erstreckt sich in Richtung des Kragens der Außenwandung der Arbeitskammer, also nach unten. Die Nase ist ferner dazu ausgebildet, sich am Kragen abzustützen, wenn der Teilbereich der Arbeitskammer zwischen dem Kragen und dem Lagerkörper um mehr als einen Schwellwert verkleinert wird. Dies ist vorteilhaft, da so bei einer Bewegung des Dämpferzylinders relativ zum Dämpfungskolben nach oben sich die hervorstehende Nase nach bereits einer kurzen Bewegung an den Kragen abstützt und somit die Bewegung abfedert. Im Ruhezustand berührt die Nase nicht den Kragen, damit der Teilbereich der Arbeitskammer zwischen dem Kragen und dem Lagerkörper den gleichen Luftdruck aufweist wie die Arbeitskammer und nicht durch die Nase von der Arbeitskammer isoliert wird. Dies ist vorteilhaft, da so der elastische Lagerkörper nicht zur Abstützung des Gewichtes des Fahrzeugs benötigt wird.

Nach Ausführungsformen der Erfindung ist der Luftfederbalg an einer oberen Abdeckung der Arbeitskammer befestigt. Die obere Abdeckung ist dabei mit dem Dämpfungskolben verbunden. Der Luftfederbalg dient als luftdichte äußere Begrenzung der Arbeitskammer, in der ein hoher Luftdruck vorherrscht, damit das Gewicht des Fahrzeugs abgestützt wird. Dadurch, dass der Luftfederbalg an einer oberen Abdeckung der Arbeitskammer befestigt ist, wird durch eine Verformung des Luftfederbalgs eine Federung erreicht. Die durch den Luftfederbalg erreichte Federung dient dazu, größere Bewegungen des Dämpferzylinders relativ zum Dämpfungskolben abzufedern.

Nach Ausführungsformen der Erfindung ist der Luftfederbalg an einen mit dem Dämpferzylinder verbundenen Abrollkolben befestigt. Der Luftfederbalg ist außerdem auf der Seite des Abrollkolbens abrollbar. Durch diese Konstruktion rollt der Luftfederbalg auf dem Abrollkolben ab, wenn sich der Dämpferzylinder relativ zum Dämpfungskolben bewegt. Somit wird eine Abdichtung der Arbeitskammer bei gleichzeitiger Federung erreicht.

Nach Ausführungsformen der Erfindung ist der Lagerkörper mit dem Abrollkolben verbunden. Mit anderen Worten ist der Abrollkolben an seinem unteren Ende über den Lagerkörper mit dem Dämpferzylinder verbunden. Kleinere Bewegungen des Dämpferzylinders werden also somit durch den Lagerkörper abgefedert. Größere Bewegungen des Dämpferzylinders werden an den Abrollkolben weitergeleitet und durch den Luftfederbalg abgefedert.

Nach Ausführungsformen der Erfindung besteht der Luftfederbalg aus einem Elastomer. Dies ist besonders vorteilhaft, da der Luftfederbalg so besonders dicht zur Abschließung der Arbeitskammer und gleichzeitig elastisch ausgebildet ist.

In einem weiteren Aspekt betrifft die Erfindung ein System aus einem Luftfederbein nach Ausführungsformen der Erfindung und einem Fahrzeug. Das Luftfederbein ist dabei zur Federung eines Rades oder einer Achse des Fahrzeuges ausgebildet.

Nachfolgend werden Ausführungsformen der Erfindung beispielhaft anhand der Figur erläutert. Es zeigt:

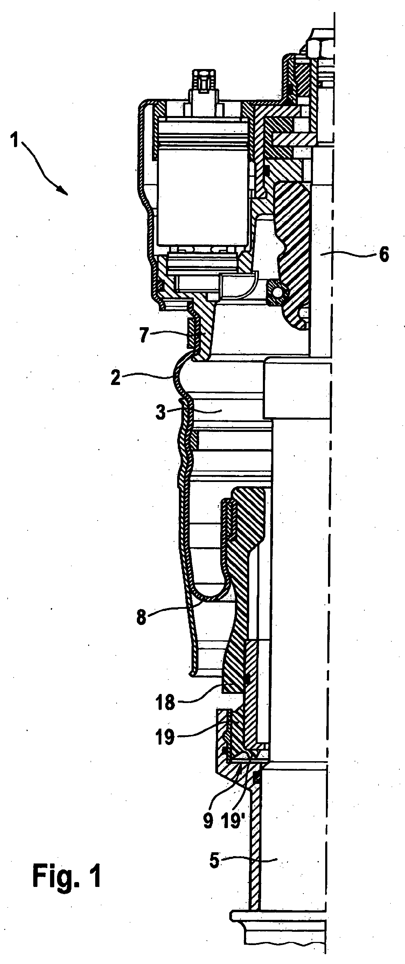

- Figur 1: eine schematische Ansicht eines Querschnitts des Lüftfederbeins nach Ausführungsformen der Erfindung.

Ähnliche Elemente werden nachfolgend mit den gleichen Bezugszeichen gekennzeichnet.

Figur 1 zeigt eine schematische Ansicht eines Querschnitts durch ein Luftfederbein nach Ausführungsformen der Erfindung. Das Luftfederbein 1 umfasst einen Luftfederbalg 2, eine Arbeitskammer 3, einen Dämpferzylinder 5, eine Kolbenstange 6, eine obere Abdeckung 7, eine Rollfalte 8 des Luftfederbalgs 2, einen Teilbereich 9 der Arbeitskammer 3, einen Abrollkolbens 18, einen Lagerkörper 19 und eine Nase 19' des Lagerkörpers 19.

An der Kolbenstange 6 ist in dem Dämpferzylinder 5 in Figur 1 nicht sichtbar ein Dämpfungskolben bewegbar angeordnet. Der Dämpfungskolben ist relativ zu dem Dämpferzylinder 5 bewegbar. Über die Kolbenstange ist der Dämpfungskolben mit dem Fahrzeug verbunden, sodass das Gewicht des Fahrzeuges teilweise auf den Dämpfungskolben und teilweise auf den Luftfederbalg 2 wirkt. Bei einer Bewegung des Dämpferzylinders 5 relativ zum Dämpfungskolben wird die Bewegung durch den Luftfederbalg durch ein Abrollen der Rollfalte an dem Abrollkolben 18 abgefedert. Bei kleineren Bewegungen des Dämpferzylinders relativ zum Dämpfungskolben wird diese kleinere Bewegung nicht durch den Luftfederbalg 2 oder nur unwesentlich durch den Luftfederbalg 2 abgefedert, da für eine Abrollbewegung der Rollfalte 8 über den Abrollkolben 18 ein kleiner Widerstand überwunden werden muss, der durch solch kleine Bewegungen nicht überwunden wird. Solch kleine Bewegungen werden daher durch den Lagerkörper 19 abgefedert. Bei einer Bewegung des Dämpferzylinders 5 relativ zum Dämpfungskolben nach oben verringert sich die Größe des Teilbereichs 9 der Arbeitskammer 3 und die Nase 19' stützt sich gegenüber einem Kragen einer Außenwandung der Arbeitskammer 3 ab. Der Lagerkörper 19 kann besonders weichfedernd ausgestaltet werden, da der Großteil des Gewichts des Fahrzeugs durch den Dämpfungskolben und den Luftfederbalg 2 gestützt wird. Somit eignet sich der Lagerkörper 19 besonders gut zur Abfederung kleinerer Bewegungen des Dämpferzylinders 5 relativ zum Dämpfungskolben. Dies hat zur Folge, dass eine besonders gute akustische Entkopplung des Fahrzeugs von der gefederten Achse oder dem gefederten Rad erreicht wird. Der Lagerkörper 19 wird im Ruhezustand auf Schub belastet und schließt die Arbeitskammer 3 luftdicht ab.

Die Arbeitskammer 3 wird außerdem durch den Luftfederbalgs 2 abgeschlossen, der einerseits an dem Abrollkolben 18 und andererseits an der oberen Abdeckung 7 befestigt ist. Der Abrollkolben 18 ist über den Lagerkörper 19 mit dem Dämpferzylinders 5 verbunden, sodass größere Auslenkungen des Dämpferzylinders 5 durch den Luftfederbalg 2 abgefedert und nicht an die obere Abdeckung 7 weitergegeben werden.

Kleinere Auslenkungen oder Bewegungen des Dämpferzylinders 5 relativ zum Dämpfungskolben werden also durch den Lagerkörper 19 abgefedert, wohingegen größere Bewegungen des Dämpferzylinders 5 relativ zum Dämpfungskolben oder umgekehrt durch den Luftfederbalg 2 abgefedert werden.

Der Luftfederbalg 2 besteht aus mit Festigkeitsträgern verstärktem Gummi und umschließt die Arbeitskammer 3. Ebenfalls zentrisch innerhalb der Arbeitskammer ist der teleskopierbare Dämpfer, der ein als Dämpferzylinder 5 ausgebildetes Gehäuse mit einem hier nicht näher dargestellten innenliegenden Dämpfungskolben und
eine an den Dämpfungskolben angebundene Kolbenstange 6 aufweist.

Der Luftfederbalg 2 ist an seinem einen oberen Ende an der oben Abdeckung 7 und an seinem anderen unteren Ende unter Bildung der Rollfalte 8 an dem mit dem Dämpferzylinder 5 verbundenen Abrollkolben 18 befestigt, auf dessen Außenseite der Luftfederbalg 2 abrollen kann.

Der Abrollkolben 18 ist an seinem oberen Ende und oberhalb des Rollfalte 8 mit dem Luftfederbalg 2 verbunden. An seinem unteren Ende ist der Abrollkolben unter Zwischenschaltung des Lagerkörpers 19 mit dem Dämpferzylinder 5 verbunden. Der Lagerkörper 19 besteht vorzugsweise aus einem Elastomer-Material und ist nicht massiv, sondern ist L-förmig mit Ausnehmungen. Mit anderen Worten besteht der Lagerkörper 19 aus einem vertikalen Teil und einem horizontalen Teil, wobei der horziontale Teil Ausnehmungen aufweist. Die Form des Lagerkörpers hat den technischen Vorteil, dass zunächst der vertikale Teil verformt wird, bevor die Nase 19' in Eingriff mit dem Kragen 9 gerät und verformt wird, d.h. es wird eine ansteigende Kraft bei der Verformung des Lagerkörpers 19 realisiert.

Die in Fig. 1 dargestellte Ausführungsform der Erfindung gewährleistet die Entkopplung zwischen Rad und Aufbau ohne zusätzlichen Bauraum zu benötigen. Es ist außerdem keine Entkopplung in Zug- und Druckrichtung notwendig, da die Entkopplung bei der in Fig. 1 dargestellten Ausführungsform stets unter Vorspannung steht. Durch die Anordnung des Lagers 19 wird die Vorlast im Arbeitspunkt deutlich reduziert. Dies ermöglicht entweder eine geringere Steifigkeit des Lagers oder eine kleinere Ausführung. Über die geringere Steifigkeit ist eine Komfortsteigerung möglich.

Durch die Anordnung und Ausbildung des Lagers wird die Vorlast im Arbeitspunkt deutlich reduziert. Das Lager wird so angeordnet, dass der Kraft durch den Kolben eine Kraft durch den Innendruck der Luftfeder entgegenwirkt. Je weiter der äußere Durchmesser des Lagerkörpers dem wirksamen Durchmesser der Luftfeder näher kommt, umso geringer wird die Vorlast auf das Lager. Durch diese Maßnahme lässt sich sie Steifigkeit im Arbeitspunkt deutlich reduzieren. So kann ein wesentlich kleineres Lager realisiert werden oder der Komfort kann gesteigert werden.

Eine Taumelbewegung kann durch eine radiale Führung des Kolbens oder durch eine hohe kardanische Steifigkeit des Lagers ausgeschlossen werden. Somit ist eine Kombination des Entkopplungslagers mit einer Luftfeder, die eine Kardanikfalte zum Kardanikausgleich nutzt, möglich. Es ist aber bei geeigneter, geometrischer Ausführung auch möglich, das Lager als Taumellager zu verwenden.

Die Ausführung des Entkopplungslagers mit der Funktion des Kardanikausgleichs ist ebenfalls möglich. Bei Luftfederbeinen, die keine Kardanikfalte enthalten, kann durch weglassen der radialen oberen Führung des Kolbens, ein Kardanikausgleich analog zu dem Taumellager geschaffen werden.

### Bezugszeichenliste

- 1: Luftfederbein
- 2: Luftfederbalg
- 3: Arbeitskammer
- 5: Dämpferzylinder
- 6: Kolbenstange
- 7: Abdeckung
- 8: Rollfalte
- 9: Teilbereich der Arbeitskammer
- 10: Abrollkolben
- 19: Lagerkörper
- 19': Nase

## Patentansprüche

1. Luftfederbein (1) für ein Fahrzeug mit:
- einem Luftfederbalg (2);
- einer Arbeitskammer (3);
- einem Dämpferzylinder (5);
- einem Dämpfungskolben; und
- einem elastisch verformbaren Lagerkörper (19);;
wobei der Dämpfungskolben innerhalb des Dämpfungszylinders (5) bewegbar angeordnet ist;
wobei der Luftfederbalg (2) eine luftdichte äußere Begrenzung der Arbeitskammer (3) ist;
wobei der Lagerkörper (19) eine luftdichte äußere Begrenzung der Arbeitskammer (3) ist;
wobei die Arbeitskammer einen Arbeitskammerluftdruck aufweist;
wobei der Lagerkörper (19) zwischen dem Dämpferzylinder (5) und einer Außenwandung der Arbeitskammer (3) angeordnet ist;
wobei sich die Arbeitskammer (3) bis unterhalb des Lagerkörpers (19) erstreckt, sodass ein Teilbereich (9) der Arbeitskammer (3) zwischen einem Kragen der Außenwandung der Arbeitskammer (3) und dem Lagerkörper (19) angeordnet ist;
wobei durch den Teilbereich (9) der Arbeitskammer (3) der Arbeitskammerluftdruck von unten auf den Lagerkörper (19) wirkt;
wobei der Lagerkörper (19) zumindest eine hervorstehende Nase (19') aufweist;
wobei die Nase sich in Richtung des Kragens der Außenwandung der Arbeitskammer (3) erstreckt und die Nase dazu ausgebildet ist, sich am Kragen abzustützen, wenn der Teilbereich (9) der Arbeitskammer (3) um mehr als einen Schwellwert verkleinert wird.

2. Luftfederbein (1) nach Anspruch 1, wobei der Lagerkörper (19) aus einem Elastomer besteht.

3. Luftfederbein (1) nach einem der vorhergehenden Ansprüche, wobei der Lagerkörper (19) zum Teil parallel zum Dämpfungskolben und Dämpfungszylinder (5) verläuft.

4. Luftfederbein (1) nach einem der vorhergehenden Ansprüche, wobei der Luftfederbalg (2) an einer oberen Abdeckung (7) der Arbeitskammer (3) befestigt ist, und wobei die obere Abdeckung (7) mit dem Dämpfungskolben verbunden ist.

5. Luftfederbein (1) nach einem der vorhergehenden Ansprüche, wobei der Luftfederbalg (2) an einem mit dem Dämpferzylinder (5) verbundenen Abrollkolben (18) befestigt ist und auf der Außenseite des Abrollkolbens (18) abrollbar ist.

6. Luftfederbein (1) nach Anspruch 5 wobei der Lagerkörper (19) mit dem Abrollkolben (18) verbunden ist.

7. Luftfederbein (1) nach einem der vorhergehenden Ansprüche, wobei der Luftfederbalg (2) aus einem Elastomer besteht.

8. System aus einem Luftfederbein (1) nach einem der vorhergehenden Ansprüche und einem Fahrzeug, wobei das Luftfederbein (1) zur Federung eines Rads oder einer Achse des Fahrzeugs ausgebildet ist.

## Claims

1. Air spring strut (1) for a vehicle, having:
- an air spring bellows (2);
- a working chamber (3);
- a damper cylinder (5);
- a damping piston; and
- an elastically deformable bearing body (19); wherein the damping piston is arranged movably within the damping cylinder (5);
wherein the air spring bellows (2) is an air-tight outer delimitation of the working chamber (3); wherein the bearing body (19) is an air-tight outer delimitation of the working chamber (3); wherein the working chamber has a working chamber air pressure;
wherein the bearing body (19) is arranged between the damper cylinder (5) and an outer wall of the working chamber (3);
wherein the working chamber (3) extends as far as below the bearing body (19), such that a subregion (9) of the working chamber (3) is arranged between a collar of the outer wall of the working chamber (3) and the bearing body (19);
wherein the working chamber air pressure acts on the bearing body (19) from below through the subregion (9) of the working chamber (3);
wherein the bearing body (19) has at least one protruding lug (19');
wherein the lug extends in the direction of the collar of the outer wall of the working chamber (3), and the lug is designed to be supported on the collar if the subregion (9) of the working chamber (3) is reduced in size by more than a threshold value.

2. Air spring strut (1) according to Claim 1, wherein the bearing body (19) is composed of an elastomer.

3. Air spring strut (1) according to one of the preceding claims, wherein the bearing body (19) runs partially parallel to the damping piston and damping cylinder (5).

4. Air spring strut (1) according to one of the preceding claims, wherein the air spring bellows (2) is fastened to an upper cover (7) of the working chamber (3), and wherein the upper cover (7) is connected to the damping piston.

5. Air spring strut (1) according to one of the preceding claims, wherein the air spring bellows (2) is fastened to a rolling piston (18) which is connected to the damper cylinder (5) and can roll on the outer side of the rolling piston (18).

6. Air spring strut (1) according to Claim 5, wherein the bearing body (19) is connected to the rolling piston (18).

7. Air spring strut (1) according to one of the preceding claims, wherein the air spring bellows (2) is composed of an elastomer.

8. System composed of an air spring strut (1) according to one of the preceding claims and of a vehicle, wherein the air spring strut (1) is designed for the suspension of a wheel or of an axle of the vehicle.

## Revendications

1. Jambe de suspension pneumatique (1) pour un véhicule avec :
- un soufflet de suspension pneumatique (2) ;
- une chambre de travail (3) ;
- un cylindre amortisseur (5) ;
- un piston amortisseur ; et
- un corps de palier (19) déformable de façon élastique ;
le piston amortisseur étant disposé de façon mobile à l'intérieur du cylindre amortisseur (5) ;
le soufflet de suspension pneumatique (2) étant une délimitation extérieure étanche à l'air de la chambre de travail (3) ;
le corps de palier (19) étant une délimitation extérieure étanche à l'air de la chambre de travail (3) ;
la chambre de travail comportant une pression d'air de chambre de travail ;
le corps de palier (19) étant disposé entre le cylindre amortisseur (5) et une paroi extérieure de la chambre de travail (3) ;
la chambre de travail (3) s'étendant jusqu'en dessous du corps de palier (19), de sorte qu'une zone partielle (9) de la chambre de travail (3) est disposée entre un col de la paroi extérieure de la chambre de travail (3) et le corps de palier (19) ;
la pression d'air de chambre de travail agissant par en bas sur le corps de palier (19) à travers la zone partielle (9) de la chambre de travail (3) ;
le corps de palier (19) comportant au moins un bec (19') saillant ;
le bec s'étendant en direction du col de la paroi extérieure de la chambre de travail (3) et le bec étant réalisé pour s'appuyer contre le col lorsque la zone partielle (9) de la chambre de travail (3) est réduite de plus d'une valeur seuil.

2. Jambe de suspension pneumatique (1) selon la revendication 1, le corps de palier (19) étant un élastomère.

3. Jambe de suspension pneumatique (1) selon l'une quelconque des revendications précédentes, le corps de palier (19) s'étendant en partie parallèlement au piston amortisseur et au cylindre amortisseur (5).

4. Jambe de suspension pneumatique (1) selon l'une quelconque des revendications précédentes, le soufflet de suspension pneumatique (2) étant fixé à un cache (7) supérieur de la chambre de travail (3) et le cache (7) supérieur étant relié au piston amortisseur.

5. Jambe de suspension pneumatique (1) selon l'une quelconque des revendications précédentes, le soufflet de suspension pneumatique (2) étant fixé à un piston de déroulement (18) relié au cylindre amortisseur (5) et pouvant être déroulé sur le côté extérieur du piston de déroulement (18).

6. Jambe de suspension pneumatique (1) selon la revendication 5, le corps de palier (19) étant relié au piston de déroulement (18).

7. Jambe de suspension pneumatique (1) selon l'une quelconque des revendications précédentes, le soufflet de suspension pneumatique (2) se composant d'un élastomère.

8. Système composé d'une jambe de suspension pneumatique (1) selon l'une quelconque des revendications précédentes et d'un véhicule, la jambe de suspension pneumatique (1) étant réalisée pour amortir une roue ou un essieu du véhicule.
